Europäisches Patentamt

European Patent Office

Office européen des brevets

(11) Numéro de publication: **0 202 194**
**A1**

## (12) DEMANDE DE BREVET EUROPEEN

(21) Numéro de dépôt: **86810199.9**

(22) Date de dépôt: **02.05.86**

(51) Int. Cl.⁴: **G01D 5/36**

(30) Priorité: **10.05.85 CH 2007/85**

(43) Date de publication de la demande:
**20.11.86 Bulletin 86/47**

(84) Etats contractants désignés:
**CH DE FR GB IT LI**

(71) Demandeur: **Asgalium S.A.**
**Avenue Léopold-Robert 73a**
**CH-2300 La Chaux-de-Fonds(CH)**

(72) Inventeur: **Heyraud, Marc**
**Recorne 24b**
**CH-2300 La Chaux-de-Fonds(CH)**

(74) Mandataire: **Rochat, Daniel Jean et al**
**Bovard SA Ingénieurs-conseils ACP**
**Optingenstrasse 16**
**CH-3000 Bern 25(CH)**

(54) **Détecteur de déplacement d'un objet.**

(57) Les flux partiels (9, 10) émis par les cellules (7, 8) influencent séparément les cellules (11, 12). Le modulateur (13) comporte à sa périphérie deux rangées concentriques (15, 16) de bandes alternativement opaques et transparentes (18, 17, 19, 20). Les signaux de position partiels émis par les cellules (11, 12) sont pondérés et soustraits l'un de l'autre dans le circuit (22), de sorte que le signal de position émis sur la ligne (25) est un signal sinusoïdal corrigé incluant un harmonique de rang 3 pondéré de façon à ce que le signal se rapproche de la forme triangulaire et symétrique idéale.

FIG. 4

EP 0 202 194 A1

## Détecteur de déplacement d'un objet

La présente invention a pour objet un détecteur capable de produire des informations successives sur un déplacement d'un objet, comprenant d'une part des moyens d'émission et de réception d'un flux et d'autre part un modulateur qui produit des modifications périodiques du flux, la période des modifications étant une fonction du dit déplacement.

On connaît déjà des détecteurs de ce genre et notamment des détecteurs qui utilisent comme moyens d'émission et de réception d'un flux, un émetteur et un récepteur d'ondes lumineuses, par exemple une diode luminescente ou à infrarouge et une résistance photosensible ou un phototransistor sensible à l'infrarouge.

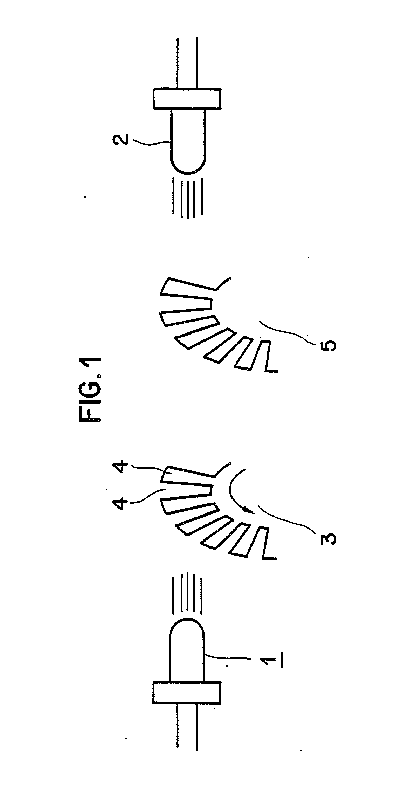

La fig. 1 montre schématiquement la disposition d'un tel détecteur connu. Un disque pourvu à sa périphérie de fentes radiales est solidaire de l'arbre d'un organe tournant. Il est disposé entre une lampe émettrice et un récepteur de façon que l'onde émise soit alternativement interrompue par le disque ou transmise à travers les fentes. On connaît aussi des systèmes à réflexion où le disque comporte des secteurs qui absorbent l'onde lumineuse et des secteurs qui la réflechissent. Le modulateur au lieu d'être un organe rotatif, peut également être un organe se déplaçant en translation, par exemple une réglette.

Ces systèmes sont utilisés notamment pour mesurer et régler des déplacements angulaires ou linéaires, par exemple dans des dispositifs d'asservissement en position et en vitesse de moteurs électriques, de machines-outils, d'imprimantes, de périphériques d'ordinateurs, etc.

La présente invention résulte de la constatation que dans les détecteurs connus du genre mentionné ci-dessus, la qualité de la détection diminuait progressivement lorsque certaines limites étaient dépassées en ce qui concerne les dimensions du modulateur et des moyens d'émission, ainsi que la vitesse du déplacement. Elle est basée sur l'idée qu'il était intéressant de chercher une disposition différente de celles qui sont connues actuellement, afin de franchir ces limites de dimension et de vitesse auxquelles on se heurtait jusqu'à maintenant.

L'invention réside d'autre part dans le fait qu'une solution avantageuse a pu être trouvée à ce problème.

Selon l'invention, le détecteur du genre mentionné au début est caractérisé en ce que les moyens de réception comportent deux récepteurs sur lesquels agissent des parties distinctes du flux et qui produisent des signaux de position partiels, en ce que les dits récepteurs sont connectés à un moyen d'élaboration de signaux de position qui traîte les dits signaux partiels, et en ce que le modulateur est agencé de façon à produire sur chacune des dites parties du flux des modifications dont les périodes sont dans un rapport entier différent de 1.

Dans le domaine de la photométrie, on utilise déjà des détecteurs que agissent par comparaison de deux flux lumineux ou par comparaison des effets de ces flux lorsqu'ils sont interceptés périodiquement par un modulateur. (Elimination of the effect of differencies in the signal shape on the accuracy of optoelectronic devices. V.P. Soldatot Measurement Techniques vol. 27, no. 2. Février 84, New York U.S.).

L'étude précitée prévoit l'emploi d'un modulateur en forme de disque présentant des échancrures. Toutefois, l'idée de rétablir une fonction prédéterminée pour la variation de l'intensité lumineuse transmise, en superposant plusieurs variations d'allures sinusoïdales et de fréquences différentes ne résulte pas de la publication citée.

On va décrire ci-après, à titre d'exemple, une forme d'exécution et une variante de l'object de l'invention, en se référant au dessin annexé, dont:

la fig. 1 est une vue schématique d'un détecteur connu,

les fig. 2, 3a et 3b des graphiques montrant respectivement l'allure idéale d'un signal de position désiré et deux résultats pratiques obtenables dans deux conditions différentes,

la fig. 4 une vue schématique d'une forme d'exécution de l'objet de l'invention,

la fig. 5 un graphique illustrant l'élaboration du signal de position avec le dispositif de la fig. 4, et

la fig. 6 un dessin schématique et partiel de la disposition du modulateur dans une variante de la forme d'exécution selon la fig. 4

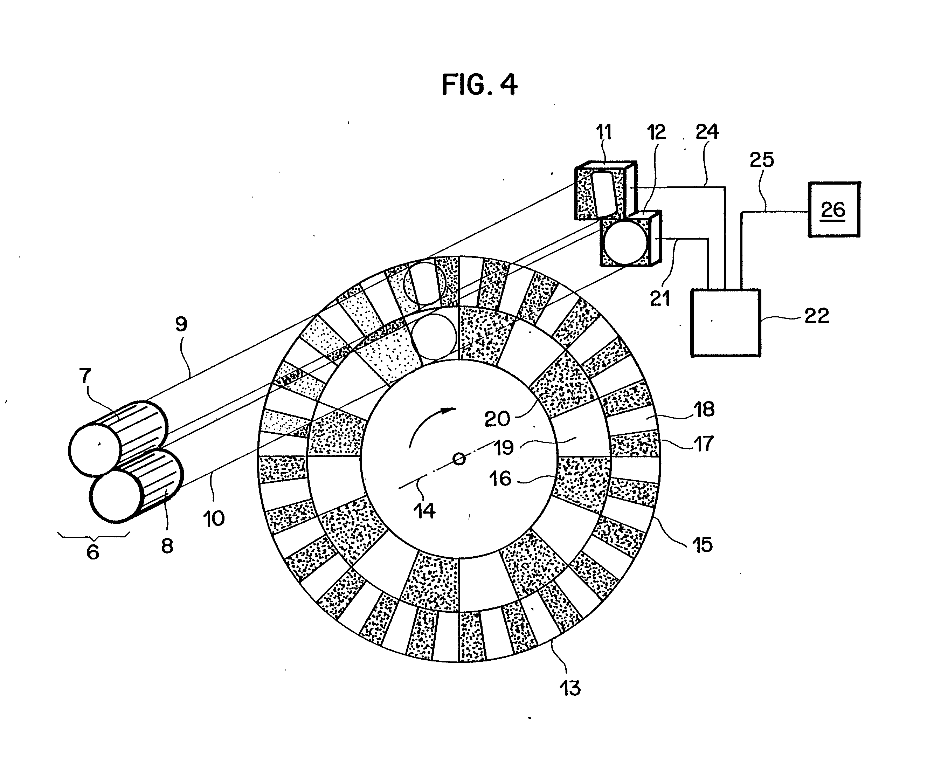

Les éléments essentiels du détecteur connu visibles à la fig. 1 se retrouvent au moins en partie dan le dispositif de la fig. 4. Un émetteur 1 d'un flux lumineux peut être constitué par exemple par une diode luminescente. Un récepteur 2 de ce flux peut être constitué par exemple par une photorésistance qui, comme on le sait, fait varier l'intensité du flux lumineux qui frappe sa surface réceptrice. Entre l'émetteur et le récepteur est disposé un modulateur 3 constitué par exemple par un disque solidaire du rotor d'un moteur dont on désire régler la vitesse ou commander la position. La périphérie de ce disque présente une série de fentes radiales séparées par des languettes de longueur égales aux fentes de façon à former des bandes alternativement opaques et transparentes. Ainsi, en tournant, le modulateur 3 interrompt et laisse passer alternativement le flux lumineux de l'émetteur 1, ce qui impressionne le récepteur 2, de sorte que le courant qui traverse ce dernier est modulé en intensité. La période des modulations correspond au temps de passage des bandes 4. Ainsi, la fréquence des impulsions de courant est une mesure de la vitesse de rotation du modulateur.

Dans certains cas, on peut intercaler entre le modulateur 3 et le récepteur 2 un masque fixe 5. Ce masque constitue le moyen que l'on trouvé jusqu'à maintenant pour améliorer et affiner la perception des variations de flux lorsque l'on était obligé pour des raisons constructives de réduire au minimum la largeur des bandes 4 ou lorsque la vitesse de rotation du modulateur 3 était élevée.

En effet, lorsque la vitesse de déplacement du modulateur est élevée, ou lorsque ses dimensions doivent être réduites au minimum, on se heurte à un certain nombre d'inconvénients et avant de passer à la description d'une forme d'exécution de l'invention telle que prévue, on va tout d'abord expliquer la nature de ces inconvénients.

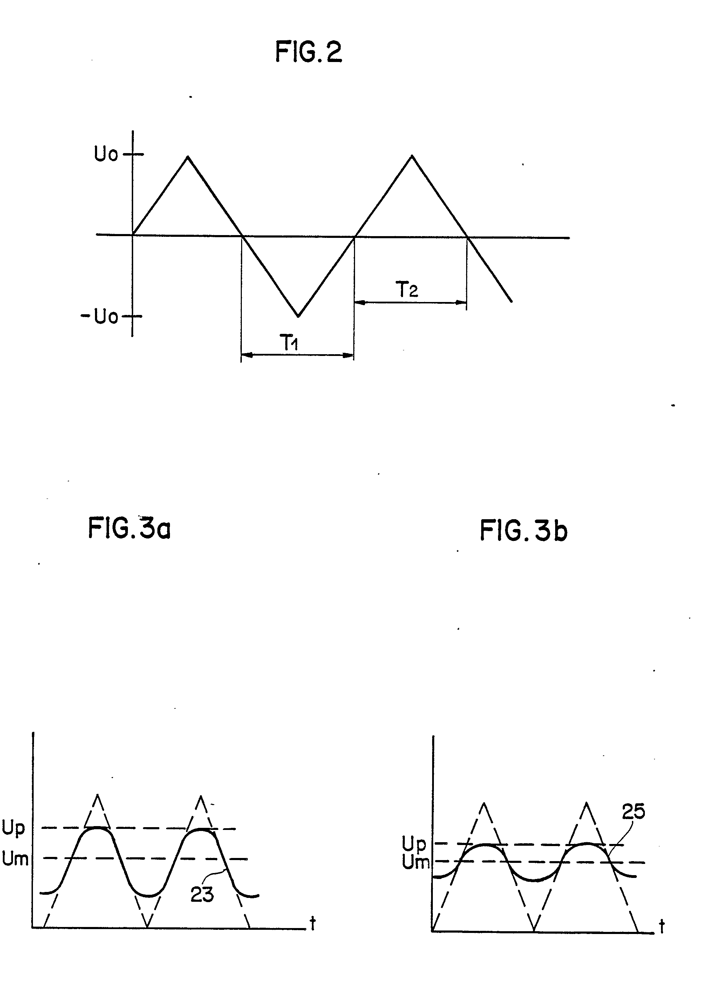

La fig. 2 montre théoriquement l'allure qu'un signal de position idéal devrait avoir pour pouvoir être fourni directement à un circuit intégré destiné à utiliser les informations produites par le détecteur, par exemple pour la commande ou le réglage d'un déplacement. On voit qu'il s'agit d'un signal périodique d'allure triangulaire variant de part et d'autre du zéro entre une tension max. $U_o$ et une tension minimum $-U_o$. D'autre part, de préférence, on devrait avoir la relation $T_1 = T_2$, de façon à ce que le signal soit symétrique par rapport au zéro.

Or, non seulement les récepteurs tel que le récepteur 2 fournissent un signal qui est soit toujours positif, soit toujours négatif, mais de plus, ces récepteurs, surtout si les fentes sont étroites et si la vitesse est élevée, fournissent un signal ondulé de part et d'autre d'une valeur moyenne constante $U_m$, comme le montre les fig. 3a et 3b. Ces deux figures illustrent la réduction de la qualité du signal reçu lorsque la vitesse du modulateur ou la fréquence de la modulation augmentent au-delà d'un certain seuil. Il est claire que la fiabilité du système de commande ou du système de réglage auquel les informations captées par le détecteur sont transmises dépend dans une large mesure de la qualité des signaux de position, de sorte que, lorsque l'on se trouve avec des détecteurs connus dans les conditions de la fig. 3a ou pire, dans celles de la fig. 3b, le niveau de cette fiabilité peut devenir inadmissible.

Or, le dispositif représenté à la fig. 4 constitue une solution à la fois simple et efficace à ces difficultés. On voit à cette fig. un émetteur 6 qui est constitué par deux cellules lumineuses 7 et 8 agencées de façon à émettre en permanence des flux lumineux 9 et 10 dirigés parallèlement en direction de deux cellules réceptrices 11 et 12 qui peuvent être soit des résistances photosensibles, soit des cellules photoélectriques ou des phototransistors. Un modulateur 14 constitué par un disque rigide tournant autour d'un axe 14 est disposé de façon que sa périphérie coupe les flux lumineux 9 et 10. Ce disque 13 est divisé à sa périphérie en deux rangées 15 et 16 de bandes 17, 18, 19, 20, alternativement opaques et transparentes. Les moyens à appliquer pour réaliser un disque tel que le disque 13 n'ont pas besoin d'être décrits en détail. Le cas échéant, les bandes transparentes, telles que les bandes 18 et 19 peuvent être réalisées par des ouvertures ou des fentes ou des échancrures pratiquées dans un disque rigide, par exemple un disque métallique ou de matière plastique. Toutefois, on peut également utiliser un disque plein en matière transparente sur lequel les bandes opaques telles que 17 et 20 sont formées par dépôt d'un revêtement ou traitement local de la matière plastique. On notera également ici, que si dans la forme d'exécution décrite, le modulateur 13 présente alternativement des bandes opaques et transparentes, il pourrait également, dans une autre forme d'exécution, présenter des bandes alternativement opaques et réfléchissantes ou transparentes et réfléchissantes. Dans ce cas, les cellules réceptrices 11 etr 12 seraient disposées de façon à être impressionées par les flux partiels 9 et 10 lorsque ces flux sont réfléchis par les bandes réfléchissantes. Elles seraient disposées symétriquement aux émetteurs 7 et 8 par rapport à un plan perpendiculaire à celui du disque 13 ce coupant ce disque diamétralement.

Comme on le voit à la fig. 4, les différentes bandes 19 et 20 de la rangée intérieure 16 ont une largeur qui correspond au diamètre du flux partiel de forme cylindrique 10 émis par la cellule 8. Bien que ce flux partiel traverse entièrement les bandes transparentes 19 lorsque le disque occupe une position telle que celle de la fig 4, et par conséquent parvienne à impressionner la cellule correspondante 12, l'expérience montre que l'on se trouve tout de même, du fait de l'inertie du système, dans une situation correspondant à celle de la fig. 3a, c'est-à-dire que le signal ondulé transmis par la ligne 21 au circuit électronique 22 est un signal ayant l'allure de la courbe 23 de cette fig. 3a.

Quant au flux partiel 9 émis par la cellule 7, il traverse partiellement, lorsque le disque 13 a la position de la fig. 4, une des bandes transparentes 18, la largeur des bandes 17 et 18 de la rangée 15 étant égale à 1/3 de la largeur des bandes 19 ou 20 de la rangée 16. Le signal de position partiel transmis par la cellule 11 dans la ligne 24 aura donc, ramené à l'échelle de la fig 3a une allure telle que celle de la courbe 25 de la fig. 3b. En effet, même dans la position d'efficacité maximum, le flux partiel 9 est encore intercepté partiellement par deux bandes opaques 17 situées de part et d'autre de la bande 18 disposée sur le chemin du flux 9.

Les signaux transmis par les deux lignes 21 et 24 sont donc des signaux quasi sinusoïdaux dont l'expression mathématique peut être donnée par les deux formules ci-dessous:

1) $U_1 = U_m + U_m \times \sin\Omega t$

2) $U_2 = U_m + U_m \times \sin3\Omega t$

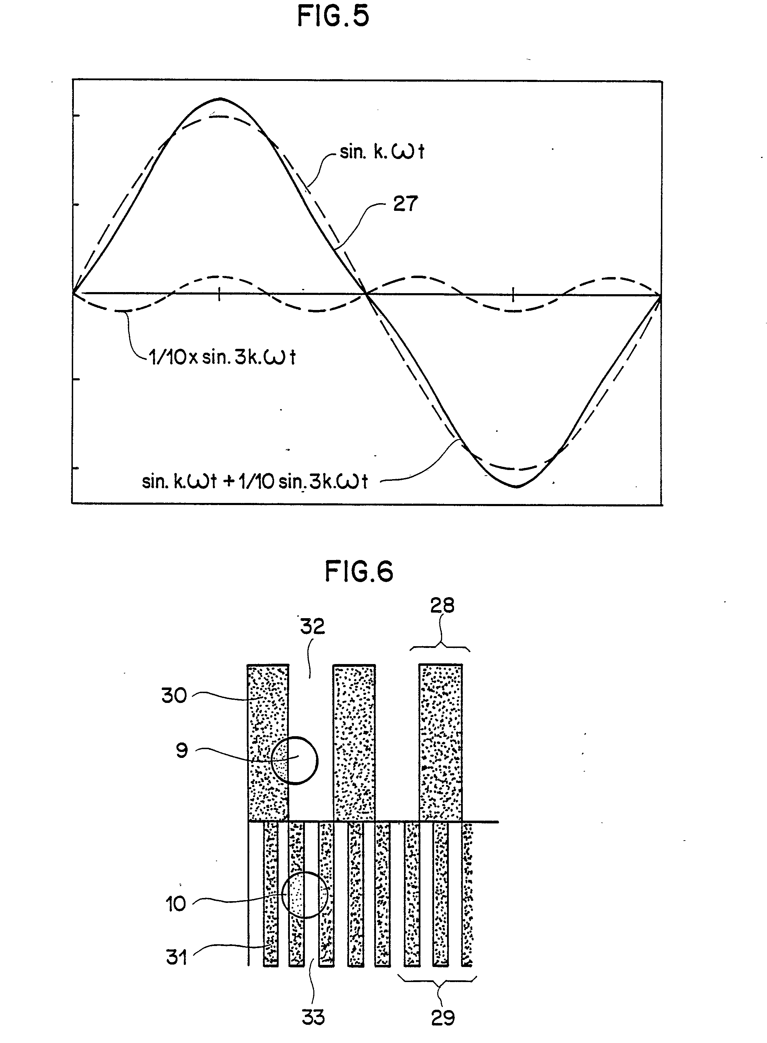

Dans ces deux expressions, $\Omega$ est évidemment la vitesse angulaire du disque 13 et t le temps. Dans le circuit 22, les signaux transmis par les lignes 21 et 24 sont pondérés et additionnés. La partie oscillante du signal transmis par la ligne 24 sera pondérée par un coéfficient k égal par exemple à 1 : 10 et sa partie constante sera multipliée par (-1). Il est évident dès lors que le signal de position résultant de l'addition des deux signaux partiels, tel qu'il est élaboré dans le circuit 22, aura une allure telle que celle qui est représentée au graphique de la fig. 5. Ce signal est émis sur la ligne 25 vers un récepteur 26 qui peut être un organe d'affichage ou un interface de transmission. On voit que la composante continue est automatiquement éliminée et que d'autre part, bien que les deux signaux captés soient des signaux ondulés, le résultat du traitement donne au signal de position selon la courbe 27 une allure se rapprochant plus de la forme idéale triangulaire de la fig. 2 que celle des deux signaux partiels selon les lignes 23 et 25.

Un autre avantage important du traitement ainsi effectué est le suivant: on sait qu'au cours de l'utilisation de cellules telles que les cellules émettrices 7 et 8 et réceptrices 11 et 12, le niveau de l'amplitude de moyenne $U_m$ du signal capté varie. En fait, il diminue progressivement du fait du vieillissement des cellules. Il suffit que les deux cellules soient identiques et soient mises en service en même temps pour que l'influence de ces variations de vieillissement soit automatiquement éliminée.

L'établissement du circuit 22 capable de pondérer la partie oscillante du signal transmis par la ligne 24 et de soustraire ce signal ainsi pondéré du signal transmis par la ligne 21, ne nécessite pas une description détaillée. Un tel circuit peut être réalisé au moyen des éléments connus dans le domaine de l'électronique et il peut être réalisé sous forme d'un circuit intégré.

Finalement, la fig. 6 représente une autre disposition, linéaire cette fois, de deux rangées 28 et 29 de bandes alternativement opaques et transparentes, les bandes opaques étant désignées par 30 et 31, tandis que les bandes transparentes sont désignées par 32 et 33. Comme on le voit, la rangée des bandes de la rangée 29 est ici également 1/3 de la largeur des bandes de la rangée 28, bien que, le cas échéant, l'addition d'un harmonique de rang supérieur à 3 au signal de base puisse également être envisagée. Le schéma représenté à la fig. 6 pourrait constituer par exemple la structure d'une réglette se déplaçant linéairement devant les deux flux partiels 9 et 10 d'un spot lumineux.

Bien que l'on ait décrit ici l'utilisation d'un flux lumineux coopérant avec un modulateur ayant une structure optique, le détecteur décrit pourrait également, dans une autre forme d'exécution, utiliser un autre type de flux, par exemple un flux de particules ou, le cas échéant, un courant électrique. Dans ce dernier cas, le modulateur pourrait être arrangé de façon à agir alternativement pour interrompre et enclencher le passage du courant dans deux branches séparées d'un réseau parcouru par un courant électrique. Bien entendu, d'autres utilisations de flux peuvent encore être imaginées.

D'autre part on décrit ci-dessus des dispositifs dans lesquels l'allure du signal de position est améliorée par addition d'un terme d'harmonique trois, mais le cas échéant, l'agencement du modulateur et du récepteur pourrait être prévu de manière à utiliser un harmonique de rang supérieur à trois, par exemple cinq en combinaison avec l'oscillation fondamentale, avec ou sans utilisation de l'harmonique de rang trois.

## Revendications

1. Détecteur capable de produire des informations successives sur un déplacement d'un objet, comprenant d'une part des moyens d'émission et de réception d'un flux et d'autre part un modulateur qui produit des modifications périodques du flux, la période des modifications étant une fonction du dit déplacement, caractérisé en ce que les moyens de réception comportent au moins deux récepteurs sur lesquels agissent des parties distinctes du flux et qui produisent des signaux de positions partiels, en ce que les dits récepteurs sont connectés à un moyen d'élaboration de signaux de position qui traîte les dits signaux partiels, et en ce que le modulateur est agencé de façon à produire sur chacune des dites parties du flux des modifications dont les périodes sont dans un rapport entier différent de 1.

2. Détecteur selon la revendication 1, caractérisé en ce qu'il comporte deux récepteurs et des moyens d'émission émittant deux flux partiels.

3. Détecteur selon la revendication 2, dans lequel les dits moyens d'émission et de réception sont des moyens optiques, caractérisé en ce que le modulateur est un organe solidaire du dit objet au moins par rapport au déplacement à détecter et présentant une structure à plusieurs rangées de bandes successives, les bandes présentant des structures optiques alternées.

4. Détecteur selon la revendication 3, caractérisé en ce que les dites bandes sont alternativement transparentes et opaques.

5. Détecteur selon la revendication 3, caractérisé en ce que les dites bandes sont alternativement réfléchissantes et opaques ou transparentes.

6. Détecteur selon la revendication 3, caractérisé en ce que les dites bandes sont réparties en deux rangées disposées côte à côte, dans l'une desquelles la largeur des bandes est un multiple de celle des bandes de l'autre rangée.

7. Détecteur selon la revendication 3 ou la revendication 6, caractérisé en ce que les dites rangées de bandes sont disposées sur le pourtour d'un obturateur rotatif circulaire solidaire de l'objet, ce dernier se déplaçant en rotation en sont décalées radialement l'une par rapport à l'autre.

8. Détecteur selon la revendication 3 ou la revendication 6, caractérisé en ce que les dites rangées de bandes sont disposées linéairement et parallèlement l'une à l'autre.

9. Détecteur selon la revendication 1, caractérisé en ce que les dit moyens d'émission et de réception sont incorporés à un circuit électrique et en ce que le modulateur est agencé de façon à remplir une fonction d'interrupteur.

10. Détecteur selon l'une quelconque des revendications précédentes, caractérisé en ce que le dit moyen d'élaboration des signaux de position est agencé de manière à additionner les dits signaux partiels.

11. Détecteur selon la revendication 10, caractérisé en ce que les récepteurs sont agencés de manière à produire des signaux partiels ondulants autour d'une valeur moyenne différente de zéro.

## FIG. 1

0 202 194

## FIG.2

## FIG.3a

## FIG.3b

# FIG. 4

0 202 194

## FIG.5

sin. k.ωt

27

1/10 x sin. 3k.ωt

sin. k.ωt + 1/10 sin. 3k.ωt

## FIG.6

Office européen
des brevets

**RAPPORT DE RECHERCHE EUROPEENNE**

Numero de la demande

EP 86 81 0199

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl.4) |
|---|---|---|---|
| D,X | MEASUREMENT TECHNIQUES, vol. 27, no. 2, février 1984, pages 117-120, Plenum Publishing Corp., New York, US; V.P. SOLDATOV: "Elimination of the effect of differences in the signal shape on the accuracy of optoelectronic devices" <br><br> ----- | 1-4,6, 7,9,10 | G 01 D 5/36 |

DOMAINES TECHNIQUES RECHERCHES (Int. Cl.4)

G 01 D
G 01 P

Le présent rapport de recherche a été établi pour toutes les revendications

| Lieu de la recherche | Date d'achèvement de la recherche | Examinateur |
|---|---|---|
| LA HAYE | 22-07-1986 | VISSER F.P.C. |